# EUROPÄISCHE PATENTANMELDUNG

(11) **EP 4 835 398 A1**
(43) Veröffentlichungstag der Anmeldung: **04.11.2026**
(21) Anmeldenummer: 26173378.6
(22) Anmeldetag: 20.04.2026
(51) Int. Cl.: G01B 11/24, G01B 11/245, G01B 21/04

(54) **VERFAHREN UND VORRICHTUNG ZUM MESSEN EINES WERKSTÜCKS MIT EINEM ENTLANG EINER TRAJEKTORIE BEWEGTEN ABSTANDSSENSOR**

(30) Priorität: 29.04.2025 DE 102025001493
(71) Anmelder: JENOPTIK Optical Systems GmbH, 07745 Jena (DE)
(72) Erfinder: Schubert, Michael, 07745 Jena (DE); Jacob, Lutz, 07745 Jena (DE); Henkel, Jakob, 07745 Jena (DE)
(74) Vertreter: Waldauf, Alexander

(57) **Zusammenfassung**

Verfahren zum Messen von mindestens einem Merkmal von Form, Lage oder Dimension eines drehbar eingespannten Werkstücks (2), umfassend:
Berechnen von mehreren Konfigurationen (SC1, SC2, SC3) eines verschiebbaren und/oder drehbaren Abstandssensors (8), wobei jede der Konfigurationen eine jeweilige Sensorposition und einen jeweiligen Sensorwinkel des Abstandssensors umfasst;
Aufnehmen von Messwerten zum Generieren eines ersten Datensatzes, umfassend:
Steuern des verschiebbaren und/oder drehbaren Abstandssensors in eine Sequenz der Konfigurationen (SC1, SC2, SC3) mit einer Steuereinheit;
Messen eines jeweiligen Abstands zwischen dem Abstandssensor (8) und einer jeweiligen Oberflächenposition (P1, P2, P3) auf der Oberfläche des Werkstücks (2) in der jeweiligen Konfiguration (SC1, SC2, SC3) des Abstandssensors;
Berechnen eines jeweiligen Koordinatensatzes der jeweiligen Oberflächenposition (P1, P2, P3) aus der jeweiligen Sensorposition und dem jeweiligen Sensorwinkel der jeweiligen Konfiguration und dem jeweiligen Abstand; Generieren des ersten Datensatzes aus den Koordinatensätzen, wobei der erste Datensatz das mindestens eine Merkmal von Form, Lage oder Dimension des Werkstücks (2) beschreibt, dadurch gekennzeichnet, dass das Berechnen der Konfigurationen (SC1, SC2, SC3) so erfolgt, dass das Messen des jeweiligen Abstands in einem vorgegebenen Winkelbereich und in einem vorgegebenen Abstandsbereich zur Oberfläche des Werkstücks (2) an der jeweiligen Oberflächenposition (P1, P2, P3) erfolgt.

## Beschreibung

Die Erfindung betrifft ein Verfahren zum Messen von Form-, Lage- oder Dimensionsmerkmalen eines Werkstücks, insbesondere von rotierbaren Maschinenelementen, wie beispielsweise Motor- und Getriebewellen, Schubstangen, Ventilen, Kolben, Schrauben, Turbinenteilen etc.

### Stand der Technik

Für eine genaue Messung von Werkstücken, insbesondere von wellenartigen Werkstücken, haben sich taktile Messverfahren etabliert, bei denen Flächen mit mechanischen Tastelementen angetastet und sehr genau gemessen werden können. Ebenso werden kontaktlose Messverfahren zur Abstandsmessung verwendet, beispielsweise optische Abstandssensoren.

Zur Ergänzung bieten sich optische Messverfahren an, bei denen ein Schattenbild des Werkstücks erzeugt wird, an dem der äußere Umriss gemessen werden kann. Aufgrund der berührungslosen Messung kann das Werkstück schnell erfasst und hochgenau vermessen werden. Ein Wechsel zwischen verschiedenen Messaufgaben ist einfach und schnell möglich. Ein Nachteil des Schattenbilds ist, dass beispielsweise konkave Teilflächen und Hinterschneidungen, die im Schattenbild nicht sichtbar sind, nicht gemessen werden können.

Daher bietet es sich an, das Messverfahren mit Abstandsmessung mittels eines Abstandssensors und das Messverfahren mit Schattenbild zu kombinieren. Durch Rotieren des wellenartigen Werkstücks um seine Längsachse und wiederholtes Abstandsmessen und Aufnehmen von Schattenbildern lassen sich seine Form und Abmessungen komplett erfassen.

In der Patentschrift DE 10 2012 104 008 B3 ist eine Vorrichtung zum Messen von Form und Abmessungen eines rotierbaren wellenartigen Werkstücks offenbart, in der das Messverfahren mit Schattenbild und das Messverfahren mit Abstandsmessung mittels eines Abstandssensors kombiniert ausführbar sind. Die Vorrichtung enthält ein Maschinenbett mit einer entlang des Maschinenbetts angeordneten Linearführung und einem parallel dazu angeordneten Linearführungssystem, eine Werkstückhalterung zur drehbaren Aufnahme des Werkstücks und eine optische Messeinheit mit einem Beleuchtungsmodul und einem Kameramodul zur Aufnahme von Schattenbildern des Werkstücks. Außerdem enthält die Vorrichtung eine zusätzliche mechanische Messeinheit mit einem taktilen Abstandssensor, wobei die mechanische Messeinheit an der optischen Messeinheit fixiert ist und eine Schwenkeinrichtung zum Einschwenken des taktilen Abstandssensor in einer Orthogonalebene zur Rotationsachse des Werkstücks aufweist.

In der Patentanmeldung WO 2022/053929 ist ebenfalls eine Vorrichtung zum Messen von Form und Abmessungen eines rotierbaren wellenartigen Werkstücks offenbart, in der das Messverfahren mit Schattenbild und das Messverfahren mit Abstandsmessung mittels eines Abstandssensors kombiniert ausführbar sind. Der Abstandssensor ist hier als optischer Abstandssensor ausgebildet. Der Abstandssensor ist verschiebbar und rotierbar an einer Halterung angebracht. So kann der Abstandssensor in einen geeigneten Winkelbereich zur Oberfläche eines zu messenden Bereichs des Werkstücks ausgerichtet werden, beispielsweise auf die Flanken eines Zahns eines Zahnrads.

### Nachteile des Stands der Technik

Die Zuverlässigkeit der Abstandsmessung mit dem Abstandssensor hängt von der Ausrichtung und dem Abstand des Abstandssensors zur Oberfläche eines zu messenden Bereichs des Werkstücks ab. Die aus dem Stand der Technik bekannten Verfahren zum Messen von Form und Abmessungen eines rotierbaren Werkstücks offenbaren keine Verfahrensschritte, wie der Abstandssensor anzusteuern ist, um eine optimale Ausrichtung und einen optimalen Abstand und somit eine hohe Zuverlässigkeit der Abstandsmessung zu erhalten. Somit sind die gemessenen Daten von Form und Abmessungen des Werkstücks nicht zuverlässig.

### Aufgabe der Erfindung

Es ist daher Aufgabe der Erfindung, ein Verfahren zum Messen von mindestens einem Merkmal von Form, Lage oder Dimension eines Werkstücks bereitzustellen, in dem die Ausrichtung des Abstandssensors so gesteuert wird, dass ein zuverlässiger Datensatz von Form, Lage oder Dimension des Werkstücks erzeugt wird.

### Erfindungsgemäße Lösung

Die Aufgabe der Erfindung wird mit einem Verfahren gemäß Anspruch 1 gelöst.

### Beschreibung

Das erfindungsgemäße Verfahren zum Messen von mindestens einem Merkmal von Form, Lage oder Dimension eines drehbar eingespannten Werkstücks umfasst:
- Berechnen von mehreren Konfigurationen eines verschiebbaren und/oder drehbaren Abstandssensors, wobei jede der Konfigurationen eine jeweilige Sensorposition und einen jeweiligen Sensorwinkel des Abstandssensors umfasst;
- Aufnehmen von Messwerten zum Generieren eines ersten Datensatzes, umfassend:
   ∘ Steuern des verschiebbaren und/oder drehbaren Abstandssensors in eine Sequenz der Konfigurationen mit einer Steuereinheit;
   ∘ Messen eines jeweiligen Abstands zwischen dem Abstandssensor und einer jeweiligen Oberflächenposition auf der Oberfläche des Werkstücks in der jeweiligen Konfiguration des Abstandssensors;
   ∘ Berechnen eines jeweiligen Koordinatensatzes der jeweiligen Oberflächenposition aus der jeweiligen Sensorposition und dem jeweiligen Sensorwinkel der jeweiligen Konfiguration und dem jeweiligen Abstand;
- Generieren des ersten Datensatzes aus den Koordinatensätzen, wobei der erste Datensatz das mindestens eine Merkmal von Form, Lage oder Dimension des Werkstücks beschreibt;
dadurch gekennzeichnet, dass das Berechnen der Konfigurationen so erfolgt, dass das Messen des jeweiligen Abstands in einem vorgegebenen Winkelbereich und in einem vorgegebenen Abstandsbereich zur Oberfläche des Werkstücks an der jeweiligen Oberflächenposition erfolgt.

Das erfindungsgemäße Verfahren kann zusätzlich umfassen:
- Beleuchten des Werkstücks mit einer Beleuchtungseinheit;
- mindestens einfaches Aufnehmen eines von der Beleuchtungseinheit erzeugten Schattenbilds des Werkstücks mit einer Sensoreinheit;
- Generieren eines zweiten Datensatzes aus dem mindestens einfachen Aufnehmen des Schattenbilds;
- Kombinieren des ersten Datensatzes und des zweiten Datensatzes zu einem dritten Datensatz, wobei der dritte Datensatz das mindestens eine Merkmal von Form, Lage oder Dimension des Werkstücks beschreibt.

Das mindestens eine Merkmal von Form, Lage oder Dimension des Werkstücks kann insbesondere ein quantitatives Merkmal sein. Das mindestens eine Merkmal kann beispielsweise ein Durchmesser des Werkstücks oder eine Koordinate der Oberflächenposition sein. Die Oberflächenposition kann beispielsweise ein Zahn eines Zahnrads, das auf einer Welle des Werkstücks angebracht ist, sein. Das Werkstück kann insbesondere ein wellenartiges Werkstück sein.

Der Abstandssensor ist auf einen Träger angebracht. Der Abstandssensor kann ein taktiler Abstandssensor sein, der beispielsweise mit einer Prüfnadel den Abstand zwischen dem Abstandssensor und einer Oberflächenposition auf der Oberfläche des Werkstücks misst. Der Abstandssensor kann ein optischer Abstandssensor sein, der optisch den Abstand zwischen dem Abstandssensor und einer Oberflächenposition auf der Oberfläche des Werkstücks misst. Der optische Abstandssensor kann beispielsweise ein Abstandssensor nach dem CCS-Prinzip sein, d.h. ein konfokaler chromatischer Abstandssensor.

Die optionale Beleuchtungseinheit und die optionale Sensoreinheit können einander gegenüberliegend ebenfalls auf diesem Träger angebracht sein. Der Träger kann U-förmig sein und das Werkstück umgreifen.

Im erfindungsgemäßen Verfahren kann der Abstandssensor eine kontaktlose Messung des Abstands, insbesondere eine optische Messung des Abstands, oder eine taktile Messung des Abstands ausführen. Eine optische Messung des Abstands kann nach dem CCS-Prinzip erfolgen, d.h. nach dem Prinzip eines konfokalen chromatischen Abstandssensors. Ein konfokaler chromatischer Abstandssensor nach dem CCS-Prinzip ist vorteilhaft aufgrund der hohen Genauigkeit, kurzen Messzeit und geringen Größe des Abstandssensors. Eine optische Messung des Abstands kann über eine Laufzeitmessung des Lichts erfolgen. Eine optische Messung kann auch mit einem Laserentfernungsmesser erfolgen. Dabei kann der Abstand aus einer Verschiebung der Phasenlage einer Amplitudenmodulation der Laserstrahlung zwischen dem ausgesendeten und empfangenen Laserstrahl bestimmt werden, um eine bessere Auflösung zu erreichen. Eine kontaktlose Messung des Abstands kann auch über Messung der Laufzeit eines Schallsignals oder über einen Druckluftpuls erfolgen. Im letzteren Fall kann ein gemessener Staudruck in einen Abstand umgerechnet werden.

Der vorgegebene Winkelbereich zur Oberfläche des Werkstücks an der jeweiligen Oberflächenposition kann ein Winkelbereich nahe der Normalen der Oberfläche sein, vorteilhafterweise ein Winkelbereich von -30° bis +30° zur Normalen der Oberfläche, besonders vorteilhafterweise ein Winkelbereich von -5° bis +5° zur Normalen der Oberfläche. Der vorgegebene Winkelbereich kann der Winkelbereich des Abstandssensors sein, in dem der Abstandssensor beim Messen des Abstands seine beste Genauigkeit erreicht. Der vorgegebene Abstandsbereich kann den Arbeitsabstand des Abstandssensors umfassen. Der vorgegebene Winkelbereich und der vorgegebene Abstandsbereich des Abstandssensors hängen somit von der Art und dem Messprinzip des Abstandssensors ab.

Der Abstandssensor ist in mindestens einer Richtung in eine Abstandssensorposition verschiebbar und/oder um mindestens eine Achse in einen Abstandssensorwinkel drehbar.

Der Abstandssensor kann in verschiedenen Konfigurationen konfiguriert werden. Eine Konfiguration kann beispielsweise eine Abstandssensorposition und einen Abstandssensorwinkel umfassen. Der Abstandssensorwinkel kann eine oder mehrere Winkelkoordinaten umfassen, beispielsweise eine horizontale Abstandssensorwinkelkoordinate und eine vertikale Abstandssensorwinkelkoordinate. Vorteilhaft kann es sein, nur eine Winkelkoordinate, beispielsweise eine horizontale, vorzusehen, weil dann nur eine Abstandssensordrehachse erforderlich ist. Die horizontale Abstandssensorwinkelkoordinate kann eine Winkelkoordinate bezüglich einer Abstandssensordrehachse parallel zur Drehachse des Werkstücks ein.

Jede der Konfigurationen des verschiebbaren und/oder drehbaren Abstandssensors kann eine Abstandssensorposition und einen Abstandssensorwinkel umfassen. Die jeweilige Abstandssensorposition kann in Koordinaten mit den Komponenten x, y und z dargestellt werden. Der jeweilige Abstandssensorwinkel kann als Azimutwinkel und Höhenwinkel dargestellt werden.

Im erfindungsgemäßen Verfahren kann das Berechnen der Konfigurationen unter Berücksichtigen von Solldaten des Werkstücks erfolgen, insbesondere unter Berücksichtigen von Konstruktionsdaten des Werkstücks. Aus den Solldaten des Werkstücks, beispielsweise in Form von CAD-Daten, sind Information über die Soll-Ausrichtung der Oberfläche an der jeweiligen Oberflächenposition berechenbar. Es ist davon auszugehen, dass die tatsächliche Ausrichtung der Oberfläche nur geringfügig von der Soll-Ausrichtung abweicht. Daher lässt sich aus den Solldaten des Werkstücks eine Abstandssensorposition und ein Abstandssensorwinkel des Abstandssensors so berechnen, dass das Messen des Abstands in einem vorgegebenen Winkelbereich und in einem vorgegebenen Abstandsbereich zur Oberfläche des Werkstücks an der jeweiligen Oberflächenposition erfolgt.

Das Berechnen der Konfigurationen kann so erfolgen, dass ein synchrones Verschieben und/oder Drehen des verschiebbaren und/oder drehbaren Abstandssensors in einer Trajektorie erfolgt, wobei die Trajektorie die Abstandssensorpositionen und die Abstandssensorwinkel der Konfigurationen umfasst.

Zum Berechnen der Trajektorie kann aus den Solldaten des Werkstücks für die jeweilige Oberflächenposition die Richtung der Normalen zur Oberfläche berechnet werden. Aus der Richtung der Normalen kann der Abstandssensorwinkel so berechnet werden, dass der Abstandssensor die jeweilige Oberflächenposition im vorgegebenen Winkelbereich zur Oberfläche des Werkstücks erfasst. Der vorgegebene Winkelbereich kann vorteilhafterweise den Winkel enthalten, für den der Abstandssensor zuverlässig funktioniert. Die Abstandssensorposition kann aus der Oberflächenposition, dem Abstandssensorwinkel und einem Arbeitsabstand zwischen der Oberflächenposition und dem Abstandssensor berechnet werden. Der Arbeitsabstand ist der Abstand zwischen der Oberflächenposition und dem Abstandssensor, für den der Abstandssensor zuverlässig funktioniert. Vorteilhafterweise kann der vorgegebene Abstandsbereich den Arbeitsabstand enthalten. Bei einem taktilen Abstandssensor ist der Arbeitsabstand durch die Länge der Prüfnadel gegeben. Bei einem kontaktlosen optischen Abstandssensor beispielsweise liegt der Arbeitsabstand in einem Messbereich des Abstandssensors. Eine Konfiguration des Abstandssensors umfasst eine jeweilige Abstandssensorposition und einen jeweiligen Abstandssensorwinkel.

Das Berechnen der Trajektorie kann die Schritte umfassen:
- Auswählen mehrerer Oberflächenpositionen, für die ein jeweiliger Koordinatensatz berechnet werden soll;
- Für jede Oberflächenposition: Berechnen der Richtung der Oberflächennormalen der jeweiligen Oberflächenpositionen, Berechnen des jeweiligen Abstandssensorwinkels innerhalb des vorgegebenen Winkelbereichs zur Oberfläche des Werkstücks an der jeweiligen Oberflächenposition, Berechnen der jeweiligen Abstandssensorposition und Berechnen der jeweiligen Konfiguration, wobei die jeweilige Konfiguration den jeweiligen Abstandssensorwinkel und die jeweilige Abstandssensorposition umfasst;
- Bestimmen einer Sequenz der Konfigurationen und Anordnen der Konfigurationen in einer Trajektorie so, dass ein Steuern des Abstandssensors zu einem Bewegen des Abstandssensors entlang der Trajektorie mit einer minimalen Länge der Trajektorie oder nahe der minimalen Länge der Trajektorie erfolgt.

Das Aufnehmen von Messwerten zum Generieren eines ersten Datensatzes kann die Schritte umfassen:
- Steuern des verschiebbaren und/oder drehbaren Abstandssensors in der Trajektorie mit einer Steuereinheit;
- Messen eines jeweiligen Abstands zwischen dem Abstandssensor und einer jeweiligen Oberflächenposition auf der Oberfläche des Werkstücks während des Bewegens des Abstandssensors in der Trajektorie;
- Berechnen eines jeweiligen Koordinatensatzes der jeweiligen Oberflächenposition aus der jeweiligen Abstandssensorposition und dem jeweiligen Abstandssensorwinkel der jeweiligen Konfiguration und dem jeweiligen Abstand;
- Generieren eines ersten Datensatzes, wobei der mit dem Abstandssensor bestimmte jeweilige Koordinatensatz der Oberflächenpositionen in den ersten Datensatz eingeht.

Das erfindungsgemäße Verfahren ermöglicht ein Messen des jeweiligen Abstands zwischen dem Abstandssensor und mehrerer Oberflächenposition auf der Oberfläche des Werkstücks, wobei der Abstandssensor entlang einer Trajektorie so geführt wird, dass das Messen des Abstands in einem vorgegebenen Winkelbereich und in einem vorgegebenen Abstandsbereich zur Oberfläche des Werkstücks an der jeweiligen Oberflächenposition erfolgt. Der vorgegebene Winkelbereich und der vorgegebene Abstandsbereich sind so gewählt, dass der Abstandssensor beim Messen des Abstands seine höchste Genauigkeit erreicht. Außerdem erfolgt ein synchrones Verschieben und/oder Drehen des verschiebbaren und/oder drehbaren Abstandssensors in der Trajektorie, wobei die Trajektorie auf eine minimale Länge optimierbar ist. Das erfindungsgemäße Verfahren ermöglicht daher ein zuverlässiges und schnelles Messen von Form, Lage oder Dimension eines Werkstücks.

Das erfindungsgemäße Verfahren kann zusätzlich ein Beleuchten des Werkstücks mit einer Beleuchtungseinheit und ein Aufnehmen eines Schattenbilds des Werkstücks mit einer Sensoreinheit umfassen. Die Sensoreinheit, beispielsweise eine flächige CCD-Kamera oder eine Zeilenkamera, befindet sich auf der Seite des Werkstücks, die gegenüber der Beleuchtungseinheit liegt. Vorteilhaft kann die Beleuchtung mit parallelem Licht erfolgen. Dann kann ein besonders genaues Schattenbild aufgenommen werden. Alternativ kann die Beleuchtung mit einer Punklichtquelle erfolgen. Dann kann das Schattenbild abhängig von der Position der Beleuchtungseinheit und der Aufnahmeebene der Sensoreinheit sein.

Während des Beleuchtens des Werkstücks mit der Beleuchtungseinheit kann das erzeugte Schattenbild des Werkstücks mit der Sensoreinheit in einer Aufnahme aufgenommen werden. Aus dieser Aufnahme kann ein zweiter Datensatz generiert werden. Der zweite Datensatz kann mindestens ein Merkmal von Form, Lage oder Dimension des Werkstücks umfassen, beispielsweise einen Durchmesser des Werkstücks. Der erste Datensatz und der zweite Datensatz können zu einem dritten Datensatz kombiniert werden, wobei der dritte Datensatz das mindestens eine Merkmal von Form, Lage oder Dimension des Werkstücks beschreibt.

Im erfindungsgemäßen Verfahren kann der erste Datensatz insbesondere mindestens ein Merkmal über Form, Lage oder Dimension des Werkstücks enthalten, das in dem aus dem mindestens einen Schattenbild generierten zweiten Datensatz nicht enthalten ist. Dies kann ein Merkmal über Form, Lage oder Dimension von konkaven Teilflächen und/oder Hinterschneidungen sein.

Im erfindungsgemäßen Verfahren kann das Werkstück um eine Drehachse gedreht werden. Bei einem wellenartigen Werkstück ist die Drehachse vorteilhafterweise entlang der langen Richtung des wellenartigen Werkstücks. Ebenso kann der Abstandssensor in einer Richtung entlang der Drehachse verschoben werden. Ebenso können die Beleuchtungseinheit und/oder die Sensoreinheit in einer Richtung entlang der Drehachse verschoben werden. Dadurch können weitere Merkmale von Form, Lage oder Dimension des Werkstücks gemessen werden.

Anhand einer Referenzposition kann im erfindungsgemäßen Verfahren ein Abgleich eines ersten Koordinatensystems des verschiebbaren und/oder drehbaren Abstandssensors und eines zweiten Koordinatensystems der Sensoreinheit erfolgen. Die Referenzposition ist eine Oberflächenposition auf der Oberfläche des Werkstücks, deren Koordinatensatz unter Verwendung sowohl des Abstandssensors als auch der Sensoreinheit bestimmbar ist. Die Referenzposition kann beispielsweise eine an dem Werkstück angebrachte Spitze oder eine Oberflächenposition auf einem an dem Werkstück angebrachten Ring sein. Die Referenzposition kann als die Oberflächenposition selektiert werden, und die Referenzposition kann als Schattenbild von der Sensoreinheit aufgenommenen werden. Der erste Datensatz kann unter Verwendung des Abstandssensors im erfindungsgemäßen Verfahren generiert werden, wobei der erste Datensatz einen Koordinatensatz der Referenzposition im ersten Koordinatensystem enthält. Der zweite Datensatz kann unter Verwendung der Sensoreinheit im erfindungsgemäßen Verfahren generiert werden, wobei der zweite Datensatz einen Koordinatensatz der Referenzposition im zweiten Koordinatensystem enthält. Aus der Kombination des ersten Datensatzes und des zweiten Datensatzes im dritten Datensatz kann somit eine Relation von Abstandssensor und Sensoreinheit berechnet werden. Diese Relation kann beispielsweise ein Versatz und/oder eine Verdrehung zwischen dem ersten Koordinatensystem und dem zweiten Koordinatensystem sein.

Auf einer Steuereinheit, die als Steuer- und Auswerteeinheit ausgebildet sein kann, und/oder einem Computer kann erfolgen:
- das Berechnen der Konfigurationen des Abstandssensors,
- ein Aufnehmen und/oder Verarbeiten von Daten des Messens des jeweiligen Abstands zwischen dem Abstandssensor und der jeweiligen Oberflächenposition auf der Oberfläche des Werkstücks in der jeweiligen Konfiguration des Abstandssensors,
- das Berechnen des jeweiligen Koordinatensatzes der jeweiligen Oberflächenposition aus der jeweiligen Sensorposition und dem jeweiligen Sensorwinkel der jeweiligen Konfiguration und dem jeweiligen Abstand,
- das Generieren des ersten Datensatzes aus den Koordinatensätzen,
- und/oder das Generieren des zweiten Datensatzes aus dem mindestens einfachen Aufnehmen des Schattenbilds,
- und/oder das Kombinieren des ersten Datensatzes und des zweiten Datensatzes zu dem dritten Datensatz.

Eine erfindungsgemäße Vorrichtung zum Messen von mindestens einem Merkmal von Form, Lage oder Dimension eines drehbar eingespannten Werkstücks umfasst einen verschiebbaren und/oder drehbaren Abstandssensor und eine Steuereinheit, auf der das erfindungsgemäße Verfahren ausführbar ist. Die erfindungsgemäße Vorrichtung kann eine Beleuchtungseinheit und eine Sensoreinheit umfassen.

### Figuren

Nachfolgend wird die Erfindung anhand von Ausführungsbeispielen näher erläutert. Die Figuren zeigen:
Fig. 1 eine Vorrichtung zum Messen von Form, Lage oder Dimension des Werkstücks, auf der das erfindungsgemäße Verfahren ausführbar ist;
Fig. 2 eine Ansicht der Verschiebe- und Dreheinheit und des Abstandssensors;
Fig. 3 verschiedene Konfigurationen der Verschiebe- und Dreheinheit zur Messung eines Abstands mit dem Abstandssensor;
Fig. 4 eine Trajektorie der Verschiebe- und Dreheinheit zur Messung eines Abstands mit dem Abstandssensor;
Fig. 5 einen Ablaufplan des erfindungsgemäßen Verfahrens;
Fig. 6 einen weiteren Ablaufplan des erfindungsgemäßen Verfahrens;
Fig. 7 die Berechnung der Abstandssensorposition und des Abstandssensorwinkels des Abstandssensors.

### Ausführungsbeispiele

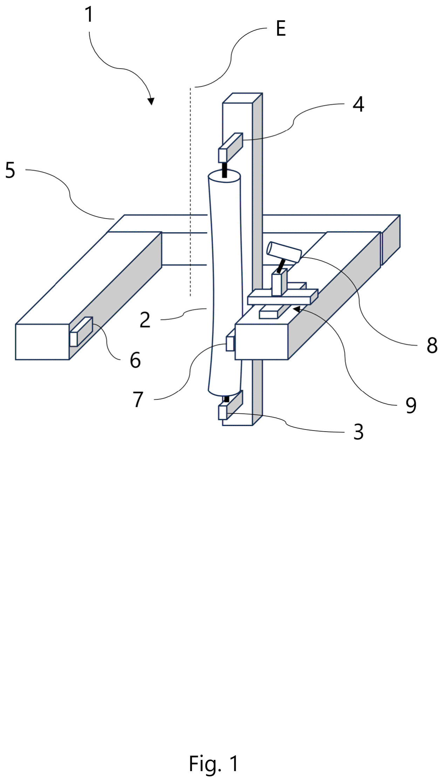

Fig. 1 zeigt eine Vorrichtung 1 zum Messen von Form, Lage oder Dimension eines Werkstücks 2, auf der das erfindungsgemäße Verfahren ausführbar ist. Das in Fig. 1 gezeigte Werkstück 2 ist ein wellenartiges Werkstück. Das Werkstück 2 ist zwischen zwei Halterungen 3, 4 drehbar eingespannt, wobei die Drehung um eine Achse parallel zu einer Richtung E erfolgt. Alternativ kann das Werkstück 2 auch nur in einer Halterung drehbar eingespannt sein. Ein U-förmiger Träger 5 umgreift das Werkstück 2. Auf dem Träger 5 sind eine Sensoreinheit 6 und eine Beleuchtungseinheit 7 angebracht. Der Träger 5 ist entlang der Richtung E verschiebbar. Die Sensoreinheit 6, beispielsweise eine flächige CCD-Kamera oder eine Zeilenkamera, befindet sich auf der Seite des Werkstücks 2, die gegenüber der Beleuchtungseinheit 7 liegt. Ein Abstandssensor 8 ist auf einer Verschiebe- und Dreheinheit 9 angebracht.

Zum Ausführen des erfindungsgemäßen Verfahrens nach Anspruch 1 sind die Sensoreinheit 6 und die Beleuchtungseinheit 7 nicht erforderlich.

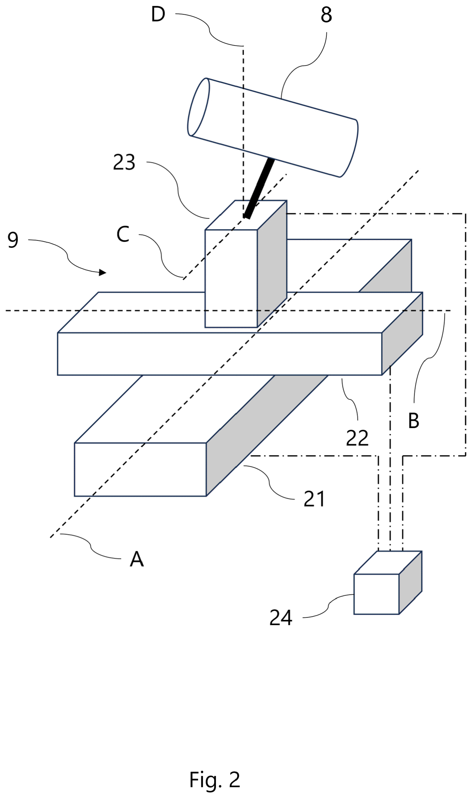

Fig. 2 zeigt die Verschiebe- und Dreheinheit 9 mit dem angebrachten Abstandssensor 8. Die Verschiebe- und Dreheinheit 9 umfasst ein Verschiebeelement 21, ein Verschiebeelement 22 und ein Drehelement 23. Das Verschiebeelement 22 ist auf dem Verschiebeelement 21 angebracht und entlang der Richtung A verschiebbar. Das Verschiebeelement 22 ist im Wesentlichen senkrecht zur Richtung A angebracht. Das Drehelement 23 ist auf dem Verschiebeelement 22 angebracht und entlang der Richtung B verschiebbar. Richtung A und Richtung B stehen im Wesentlichen senkrecht zueinander und auch im Wesentlichen senkrecht zur Richtung E. Der Abstandssensor 8 ist auf dem Drehelement 23 angebracht und um die Achse C und die Achse D drehbar. Die Achse C ist im Wesentlichen parallel zur Richtung A. Die Achse D ist im Wesentlichen parallel zur Richtung E. Somit ist der Abstandssensor 8 entlang Richtung A und Richtung B verschiebbar und um Achse C und Achse D drehbar. Verschiebeelement 21, Verschiebeelement 22 und Drehelement 23 werden von einer Steuereinheit 24 angesteuert.

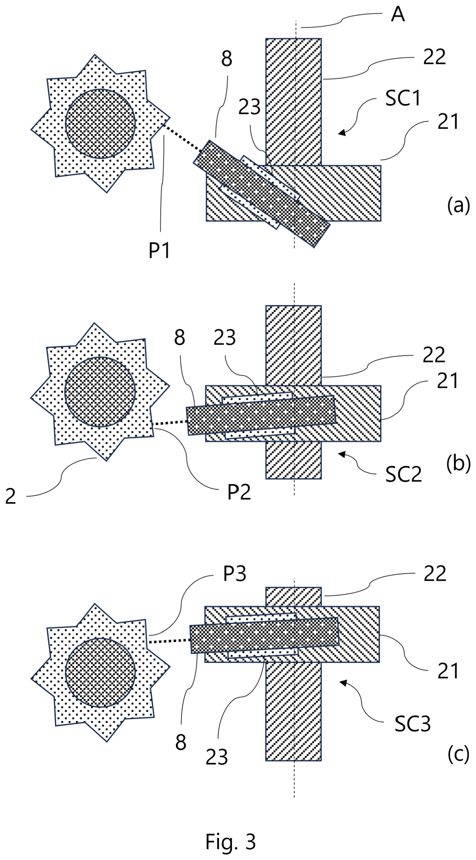

Fig. 3 (a), (b) und (c) zeigt den Abstandssensor 8 in verschiedenen Konfigurationen SC1, SC2 und SC3 während des Messens des Abstands zwischen dem Abstandssensor 8 und den Oberflächenpositionen P1, P2 und P3 auf der Oberfläche des Werkstücks 2. Der Blick ist von oben auf das Werkstück 2 und den Abstandssensor 8, d.h. die Blickrichtung ist entlang der Richtung E. Die gestrichelte Linie zwischen dem Abstandssensor 8 und dem Werkstück 2 zeigt die Richtung an, entlang der ein Abstand zwischen dem Abstandssensor 8 und dem Werkstück 2 gemessen wird. Entlang der gestrichelten Linie kann ein Messstrahl eines optischen Abstandssensors oder ein Messtaster eines taktilen Abstandssensors ausgerichtet sein.
- Fig. 3 (a): Die Steuereinheit 24 steuert das Verschiebeelement 21, das Verschiebeelement 22 und das Drehelement 23 in die Abstandssensorposition und den Abstandssensorwinkel der Konfiguration SC1. Der Abstand zur Oberflächenposition P1 wird vom Abstandssensor 8 unter einem kleinen Winkel zur Normalen der Oberfläche an der Oberflächenposition P1 gemessen, wobei der kleine Winkel in einem vorgegebenen Winkelbereich ist.
- Fig. 3 (b): Die Steuereinheit 24 steuert das Verschiebeelement 21, das Verschiebeelement 22 und das Drehelement 23 in die Abstandssensorposition und den Abstandssensorwinkel der Konfiguration SC2. Der Abstand zur Oberflächenposition P2 wird vom Abstandssensor 8 unter einem kleinen Winkel zur Normalen der Oberfläche an der Oberflächenposition P2 gemessen, wobei der kleine Winkel in einem vorgegebenen Winkelbereich ist.
- Fig. 3 (c): Die Steuereinheit 24 steuert das Verschiebeelement 21, das Verschiebeelement 22 und das Drehelement 23 in die Abstandssensorposition und den Abstandssensorwinkel der Konfiguration SC3. Der Abstand zur Oberflächenposition P3 wird vom Abstandssensor 8 unter einem kleinen Winkel zur Normalen der Oberfläche an der Oberflächenposition P3 gemessen, wobei der kleine Winkel in einem vorgegebenen Winkelbereich ist.

Fig. 3 (a), (b) und (c) zeigt das erfindungsgemäße Verfahren beispielhaft für drei Oberflächenpositionen P1, P2, P3. Das erfindungsgemäße Verfahren kann um weitere Oberflächenposition auf die Oberflächenpositionen P1, P2, ... PN erweitert werden.

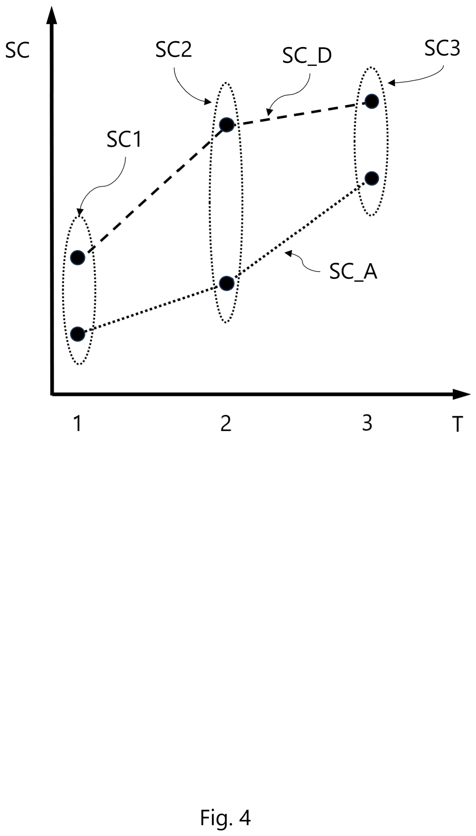

Fig. 4 zeigt eine beispielhafte Trajektorie von Abstandssensorposition und Abstandssensorwinkel des Abstandssensors 8 mit drei Positionen der Trajektorie. Die jeweilige Abstandssensorposition und der jeweilige Abstandssensorwinkel der Konfigurationen sind über die Positionen der Trajektorie T aufgetragen. Die Steuereinheit 24 steuert die Abstandssensorposition SC_A entlang der Achse A des Verschiebeelements 22 und den Abstandssensorwinkel SC_D um die Achse D des Drehelements 23 im Verlauf der Trajektorie.
- Position 1 der Trajektorie T: Abstandssensorposition SC_A und Abstandssensorwinkel SC_D der Konfiguration SC1 werden angesteuert.
- Position 2 der Trajektorie T: Abstandssensorposition SC_A und Abstandssensorwinkel SC_D der Konfiguration SC2 werden angesteuert.
- Position 3 der Trajektorie T: Abstandssensorposition SC_A und Abstandssensorwinkel SC_D der Konfiguration SC3 werden angesteuert.

Die Konfigurationen SC1, SC2 und SC3 in Fig. 4 entsprechen qualitativ den Konfigurationen SC1, SC2 und SC3 in Fig. 3.

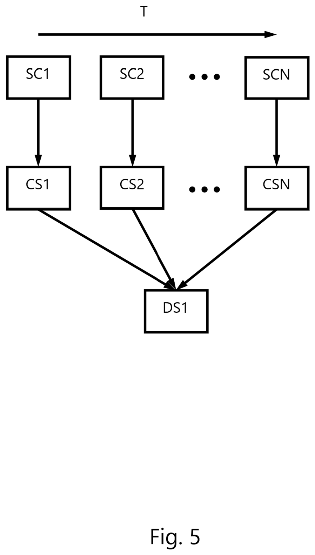

Fig. 5 zeigt das erfindungsgemäße Verfahren in einem Ablaufplan. Die Steuereinheit steuert den Abstandssensor in der Trajektorie T in die Konfigurationen SC1, SC2 und mögliche weitere Konfigurationen bis in eine Konfiguration SCN, wobei jede der Konfigurationen SC1, SC2, ... SCN eine jeweilige Abstandssensorposition und einen jeweiligen Abstandssensorwinkel umfasst. In jeder der Konfiguration SC1, SC2, ... SCN erfolgt:
- Messen eines jeweiligen Abstands zwischen dem Abstandssensor und einer jeweiligen Oberflächenposition auf der Oberfläche des Werkstücks in der jeweiligen Konfiguration des Abstandssensors;
- Berechnen eines jeweiligen Koordinatensatzes der jeweiligen Oberflächenposition aus der jeweiligen Abstandssensorposition und dem jeweiligen Abstandssensorwinkel der jeweiligen Konfiguration und dem jeweiligen Abstand;

Die jeweiligen Koordinatensätze sind in Fig. 5 als CS1, CS2 und mögliche weitere Koordinatensätze bis CSN bezeichnet. Aus den Koordinatensätzen CS1, CS2, ... CSN wird ein erster Datensatz DS1 generiert.

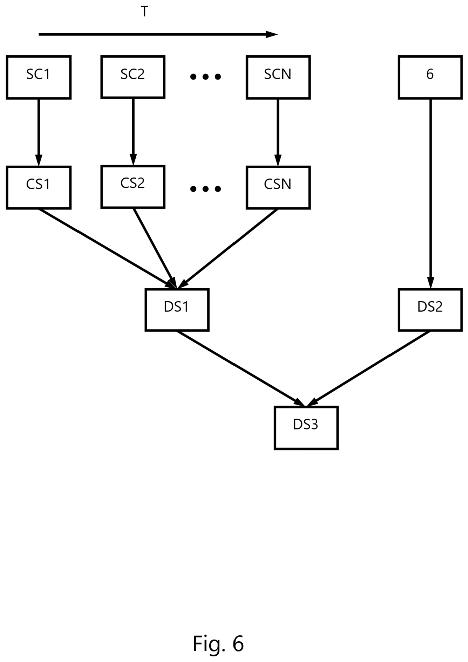

Fig. 6 zeigt das erfindungsgemäße Verfahren mit einem zusätzlichen Aufnehmen eines Schattenbilds mit der Sensoreinheit 6. Die Beleuchtungseinheit 7 beleuchtet das Werkstück 2, und die Sensoreinheit 6 nimmt ein Schattenbild des Werkstücks 2 auf. Aus dem Schattenbild wird ein zweiter Datensatz DS2 generiert. Der zweite Datensatz DS2 enthält Information über Form, Lage oder Dimension des Werkstücks 2, die aus dem Schattenbild berechenbar sind, beispielsweise den Durchmesser des Werkstücks 2.

Die Berechnung des Datensatzes DS1 erfolgt gemäß der Beschreibung von Fig. 5.

Der erste Datensatz DS1 und der zweite Datensatz DS2 werden zu einem dritten Datensatz DS3 kombiniert, wobei der dritte Datensatz DS3 mindestens ein Merkmal von Form, Lage oder Dimension des Werkstücks 2 beschreibt.

Der erste Datensatz DS1 kann insbesondere Informationen über mindestens ein Merkmal von Form, Lage oder Dimension des Werkstücks 2 umfassen, die in dem aus dem mindestens einen Schattenbild generierten zweiten Datensatz DS2 nicht enthalten sind. Der erste Datensatz DS1 kann insbesondere Informationen über eine Oberflächenposition in einem konkaven oder hinterschnittenen Bereich des Werkstücks 2 umfassen.

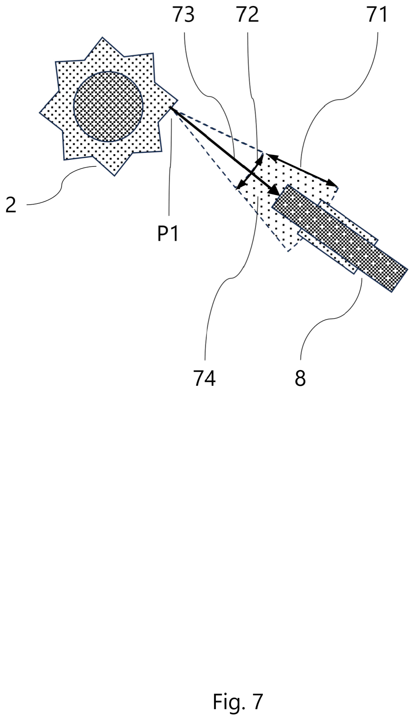

Fig. 7 zeigt, wie für die Oberflächenposition P1 die Abstandssensorposition und der Abstandssensorwinkel des Abstandssensors 8 berechnet werden kann. An die Oberflächenposition P1 wird ein Vektor 73 angesetzt. Die Länge des Vektors 73 ist so, dass der Vektor 73 in dem vorgegebenen Abstandsbereich 71 endet. Der vorgegebene Abstandsbereich 71 umfasst den Arbeitsabstand des Abstandssensors 8, wobei der Arbeitsabstand der Abstand zwischen der Oberflächenposition P1 und dem Abstandssensor 8 ist, für den der Abstandssensor 8 zuverlässig funktioniert. Die Richtung des Vektors 73 ist ein Winkel in dem vorgegebenen Winkelbereich 72 zur Oberfläche des Werkstücks 2 an der Oberflächenposition P1. Die Abstandssensorposition ist der Endpunkt des Vektors 73. Der Endpunkt des Vektors 73 befindet sich in dem punktiert gekennzeichneten Segment 74. Der Abstandssensorwinkel ist die invertierte Richtung des Vektors 73. Somit misst der Abstandssensor 8 den Abstand zur Oberflächenposition P1 in dem vorgegebenen Abstandsbereich 71 und in dem vorgegebenen Winkelbereich 72.

Das erfindungsgemäße Verfahren ist nicht auf die gezeigten Ausführungsbeispiele beschränkt.

## Patentansprüche

1. Verfahren zum Messen von mindestens einem Merkmal von Form, Lage oder Dimension eines drehbar eingespannten Werkstücks (2), umfassend:
Berechnen von mehreren Konfigurationen (SC1, SC2, ... SCN) eines verschiebbaren und/oder drehbaren Abstandssensors (8), wobei jede der Konfigurationen (SC1, SC2, ... SCN) eine jeweilige Sensorposition und einen jeweiligen Sensorwinkel des Abstandssensors (8) umfasst;
Aufnehmen von Messwerten zum Generieren eines ersten Datensatzes (DS1), umfassend:
• Steuern des verschiebbaren und/oder drehbaren Abstandssensors (8) in eine Sequenz der Konfigurationen (SC1, SC2, ... SCN) mit einer Steuereinheit (24);
• Messen eines jeweiligen Abstands zwischen dem Abstandssensor (8) und einer jeweiligen Oberflächenposition (P1, P2, ... PN) auf der Oberfläche des Werkstücks (2) in der jeweiligen Konfiguration (SC1, SC2, ... SCN) des Abstandssensors (8);
• Berechnen eines jeweiligen Koordinatensatzes (CS1, CS2, ... CSN) der jeweiligen Oberflächenposition (P1, P2, ... PN) aus der jeweiligen Sensorposition und dem jeweiligen Sensorwinkel der jeweiligen Konfiguration (SC1, SC2, ... SCN) und dem jeweiligen Abstand;
Generieren des ersten Datensatzes (DS1) aus den Koordinatensätzen (CS1, CS2, ... CSN), wobei der erste Datensatz (DS1) das mindestens eine Merkmal von Form, Lage oder Dimension des Werkstücks (2) beschreibt;
**dadurch gekennzeichnet, dass** das Berechnen der Konfigurationen (SC1, SC2, ... SCN) so erfolgt, dass das Messen des jeweiligen Abstands in einem vorgegebenen Winkelbereich (72) und in einem vorgegebenen Abstandsbereich (71) zur Oberfläche des Werkstücks (2) an der jeweiligen Oberflächenposition (P1, P2, ... PN) erfolgt.

2. Verfahren nach Anspruch 1, wobei das Berechnen der Konfigurationen (SC1, SC2, ... SCN) unter Berücksichtigen von Solldaten des Werkstücks (2) erfolgt, insbesondere unter Berücksichtigen von Konstruktionsdaten des Werkstücks (2).

3. Verfahren nach Anspruch 1 oder 2, wobei das Berechnen der Konfigurationen (SC1, SC2, ... SCN) so erfolgt, dass ein synchrones Verschieben und/oder Drehen des verschiebbaren und/oder drehbaren Abstandssensors (8) in einer Trajektorie (T) erfolgt, wobei die Trajektorie (T) die Sensorpositionen und die Sensorwinkel der Konfigurationen (SC1, SC2, ... SCN) umfasst.

4. Verfahren nach einem der vorangegangen Ansprüche, wobei der vorgegebene Winkelbereich (72) ein Winkelbereich von -30° bis +30° zur Normalen der Oberfläche ist, insbesondere ein Winkelbereich von -5° bis +5° zur Normalen der Oberfläche.

5. Verfahren nach einem der vorangegangenen Ansprüche, außerdem umfassend Drehen des Werkstücks (2) um eine Drehachse des drehbar eingespannten Werkstücks (2) und/oder Verschieben des Abstandssensors (8) in einer Richtung entlang der Drehachse.

6. Verfahren nach einem der vorangegangenen Ansprüche, wobei der Abstandssensor (8) eine kontaktlose Messung des Abstands, insbesondere eine optische, akustische oder pneumatische Messung des Abstands, oder eine taktile Messung des Abstands ausführt.

7. Verfahren nach einem der vorangegangenen Ansprüche, wobei der erste Datensatz (DS1) insbesondere Informationen über eine Oberflächenposition (P1, P2, ... PN) in einem konkaven oder hinterschnittenen Bereich des Werkstücks (2) umfasst.

8. Verfahren nach einem der vorangegangenen Ansprüche, zusätzlich umfassend:
Beleuchten des Werkstücks (2) mit einer Beleuchtungseinheit (7);
mindestens einfaches Aufnehmen eines von der Beleuchtungseinheit (7) erzeugten Schattenbilds des Werkstücks (2) mit einer Sensoreinheit (6);
Generieren eines zweiten Datensatzes (DS2) aus dem mindestens einfachen Aufnehmen des Schattenbilds;
Kombinieren des ersten Datensatzes (DS1) und des zweiten Datensatzes (DS2) zu einem dritten Datensatz (DS3), wobei der dritte Datensatz (DS3) das mindestens eine Merkmal von Form, Lage oder Dimension des Werkstücks (2) beschreibt.

9. Verfahren nach Anspruch 8,
wobei das Werkstück (2) eine Referenzposition umfasst,
wobei die Referenzposition als Schattenbild von der Sensoreinheit (6) aufgenommenen wird und die Referenzposition als die Oberflächenposition (31) selektiert wird,
zusätzlich umfassend ein Berechnen einer Relation von Abstandssensor (8) und Sensoreinheit (6) aus dem im dritten Datensatz (DS3) beschriebenen mindestens einen Merkmal von Form, Lage oder Dimension des Werkstücks (2).

10. Vorrichtung zum Messen von mindestens einem Merkmal von Form, Lage oder Dimension eines drehbar eingespannten Werkstücks (2), umfassend einen verschiebbaren und/oder drehbaren Abstandssensor (8) und eine Steuereinheit (24), auf der das Verfahren nach einem der vorangegangenen Ansprüche ausführbar ist.

11. Vorrichtung nach Anspruch 10, zusätzlich umfassend eine Beleuchtungseinheit (7) und eine Sensoreinheit (6).
